# EUROPÄISCHE PATENTANMELDUNG

(11) **EP 0 818 635 A2**
(43) Veröffentlichungstag der Anmeldung: **14.01.1998**
(21) Anmeldenummer: 97102033.4
(22) Anmeldetag: 08.02.1997
(51) Int. Cl.: F16C 33/74

(54) **Gleitlagerbuchse**

(30) Priorität: 10.07.1996 DE 29611964 U
(71) Anmelder: BPW Bergische Achsen Kommanditgesellschaft, 51674 Wiehl (DE)
(72) Erfinder: Leidig, Hans-Josef, 51580 Reichshof (DE)
(74) Vertreter: Stenger, Watzke & Ring Patentanwälte

(57) **Zusammenfassung**

Die Erfindung betrifft eine insbesondere für eine Bremsnockenwelle (1) einer Fahrzeugbremse für Fahrzeugachsen bestimmten Gleitlagerbuchse (4) mit diese stirnseitig abdichtenden Dichtringen (8), die mit einer Dichtlippe (8b) dichtend auf der Welle (1) aufliegen und mittels eines formstabilen Halteteils (8a) in einer Ringnut (4b) der Gleitlagerbuchse (4) gehalten sind, wobei zwischen der Dichtlippe (8b) und dem Halteteil (8a) einerseits und der Wellenoberfläche andererseits ein Hohlraum gebildet ist. Um bei geringfügiger elastischer Verformung der Dichtringe bei der Montage einen zuverlässigen Sitz der Dichtringe zu gewährleisten, ist die Ringnut (4b) jeweils in einer Stirnfläche der Gleitlagerbuchse (4) angeordnet und mit einer etwa radial verlaufenden Anlagefläche (4c) sowie einer schräg hierzu verlaufenden Stützfläche (4d) für den Halteteil (8a) des Dichtringes (8) ausgebildet, der nach elastischer Verformung mittels einer in eine Hinterschneidung (4e) der Ringnut (4b) eingreifenden Nase (8c) in axialer Richtung formschlüssig an der Gleitlagerbuchse (4) gehalten ist.

## Beschreibung

Die Erfindung betrifft eine insbesondere für eine Bremsnockenwelle einer Fahrzeugbremse, insbesondere einer Trommelbremse bestimmte Gleitlagerbuchse mit diese stirnseitig abdichtenden Dichtringen.

Derartige Gleitlagerbuchsen sind beispielsweise aus der DE 44 01 526 C1 bekannt. Die Dichtringe liegen mit einer Dichtlippe dichtend auf der Welle auf und sind mittels eines formstabilen Halteteils in einer Ringnut der Gleitlagerbuchse gehalten, wobei zwischen der Dichtlippe und dem Halteteil einerseits und der Wellenoberfläche andererseits ein Hohlraum gebildet ist. Die Ringnut ist bei der bekannten Ausführung in der zylindrischen Innenwandung der Gleitlagerbuchse ausgebildet, so daß der Dichtring beim Einsetzen stark verformt werden muß.

Der Erfindung liegt die **Aufgabe** zugrunde, eine insbesondere für eine Bremsnockenwelle einer Fahrzeugbremse für Fahrzeugachsen bestimmte Gleitlagerbuchse der eingangs beschriebenen Art dahingehend weiterzubilden, daß sich bei gleichzeitiger Reduzierung der Bauteile eine vereinfachte Montage und Verbesserung der Abdichtwirkung ergibt.

Die **Lösung** dieser Aufgabenstellung durch die Erfindung ist dadurch gekennzeichnet, daß die Ringnut jeweils in einer Stirnfläche der Gleitlagerbuchse angeordnet und mit einer etwa radial verlaufenden Anlagefläche sowie einer schräg hierzu verlaufenden Stützfläche für den Halteteil des Dichtringes ausgebildet ist, der nach elastischer Verformung mittels einer in eine Hinterschneidung der Ringnut eingreifenden Nase in axialer Richtung formschlüssig an der Gleitlagerbuchse gehalten ist.

Durch diese erfindungsgemäße Weiterbildung entfallen nicht nur zusätzliche Halteelemente für die Dichtringe, sondern es ergibt sich darüber hinaus eine einfachere Gestaltung der Dichtung bei gleichzeitiger verbesserter Dichtwirkung. Schließlich wird neben einer Gewichtsreduzierung eine schnellere und einfachere Montage ermöglicht, da die Dichtringe ohne große Verformung in die Lagerbuchse eingesetzt und mit dieser als vormontierte Einheit auf die Welle aufgeschoben werden können.

Gemäß einem weiteren Merkmal der Erfindung wird jeder einteilig mit einem formstabilen Halteteil und einer elastisch verformbaren Dichtlippe ausgebildeter Dichtring mit einer elastisch verformbaren Nase ausgeführt.

Um auch beim rauhen Alltagsbetrieb eine sichere Halterung der Dichtringe in der zur Verwendung an einer Bremsnockenwelle bestimmten Gleitlagerbuchse zu gewährleisten, wird bei einer bevorzugten Ausführungsform der Erfindung jeder Dichtring mindestens teilweise durch eine Lagerhalbschale der Gleitlagerbuchse überdeckt. Die Oberfläche der Gleitlagerbuchse wird vorzugsweise kugelringförmig ausgebildet, wobei die Außenkonturen der Dichtringe in Fortsetzung der Außenkontur der Oberfläche der Gleitlagerbuchse verlaufen.

Mit der Erfindung wird schließlich bei der Verwendung der Gleitlagerbuchse für Bremsnockenwellen vorgeschlagen, eine der Lagerhalbschalen als Teil des Lagerträgers und die andere Lagerhalbschale als Teil eines Fixpunkthalters für einen Gestängesteller auszubilden. Hierdurch ergibt sich eine weitere Herabsetzung der für die erfindungsgemäße Lagerung verwendeten Einzelteile.

Auf der Zeichnung ist ein Ausführungsbeispiel der Erfindung als Gleitlagerbuchse für die Bremsnockenwelle einer Trommelbremse dargestellt, und zwar zeigen:
- Fig. 1: einen Längsschnitt durch eine Gleitlagerung eines Endes einer mit einem Gestängesteller versehenen Bremsnookenwelle,
- Fig. 2: einen vergrößert dargestellten Längsschnitt durch die zugehörige Gleitlagerbuchse und
- Fig. 3: eine vergrößerte Darstellung der einen Dichtring aufnehmenden Ringnut.

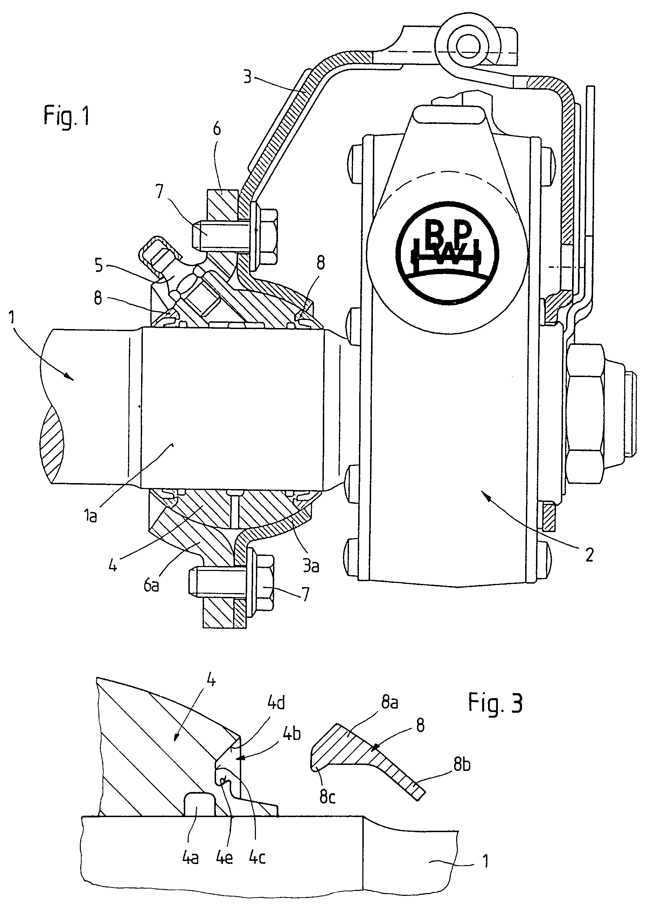

In Fig. 1 ist ein Ende einer für Trommelbremsen von Fahrzeugachsen vorgesehenen Bremsnockenwelle 1 zu erkennen, auf die ein automatischer Gestängesteller 2 aufgesetzt ist. Dieser Gestängesteller 2 dient der selbsttätigen Nachstellung der Bremsbacken der Trommelbremse aufgrund des Verschleißes der Bremsbeläge. Er ist zu diesem Zweck mit einem Fixpunkthalter 3 verbunden, der seinerseits am nicht dargestellten Achskörper der Fahrzeugachse befestigt ist und auf diese Weise einen Fixpunkt für den Gestängesteller 2 bildet.

Das den Gestängesteller 2 tragende Ende der Bremsnockenwelle 1 wird mittels einer Gleitlagerbuchse 4 gelagert, die auf einer zylindrischen Mantelfläche 1a der Bremsnockenwelle 1 angeordnet und mit einem Schmiernippel 5 versehen ist. Dieser Schmiernippel 5 steht über geeignete Schmiermittelkanäle mit in der zylindrischen Lagerfläche der Gleitlagerbuchse 4 ausgebildeten Schmiernuten 4a in Verbindung.

Die Lagerung der Gleitlagerbuchse 4 an dem auf der Zeichnung nicht dargestellten Achskörper erfolgt durch einen mit dem Achskörper verbundenen, vorzugsweise verschweißten Lagerträger 6, der gemäß Fig. 1 als Lagerhalbschale 6a für die mit einer kugelringförmigen Oberfläche ausgebildete Gleitlagerbuchse 4 ausgebildet ist. Die andere Lagerhalbschale 3a wird durch entsprechende Ausbildung des Fixpunkthalters 3 gebildet, der mittels Schrauben 7 am Lagerträger 6 angeschraubt ist. Auf diese Weise werden bisher durch zusätzliche Bauteile gebildete Lagerhalbschalen vermieden.

Um die Lagerflächen der Gleitlagerbuchse 4 sowohl gegen Eindringen von Schmutz als auch gegen Austreten von Schmiermittel zu sichern, sind zwei Dichtringe 8 vorgesehen, die formschlüssig in einer Ringnut 4b in der Gleitlagerbuchse 4 festgelegt sind und eine stirnseitige Abdichtung der durch die Gleitlagerbuchse 4 geschaffenen Gleitlagerung darstellen.

Wie die vergrößerte Darstellung in Fig. 3 zeigt, ist jeder Dichtring 8 in einer hinterschnittenen Ringnut 4b formschlüssig in der Gleitlagerbuchse 4 festgelegt. Jede Ringnut 4b ist mit einer etwa radial verlaufenden Anlagefläche 4c und einer schräg hierzu verlaufenden Stützfläche 4d für den formstabilen Halteteil 8a des Dichtringes 8 sowie mit einer Hinterschneidung 4e versehen, in die eine elastisch verformbare Nase 8c des Dichtringes 8 eingreift. Hierdurch ergibt sich einerseits eine gute Abstützung und Lagerung des Dichtringes 8 mittels seines Halteteils 8a und andererseits nur eine geringe elastische Aufweitung im Bereich der Nase 8c beim Einsetzen des Dichtringes 8 in die in der Stirnfläche der Gleitlagerbuchse 4 ausgebildete Ringnut 4b. Der Dichtring 8 kann somit einteilig mit dem formstabilen Halteteil 8a und der elastisch verformbaren Dichtlippe 8b und Nase 8c ausgeführt werden, wobei die Dichtlippe 8b unter Bildung eines Hohlraumes an der zylindrischen Mantelfläche 1a der Bremsnockenwelle 1 anliegt.

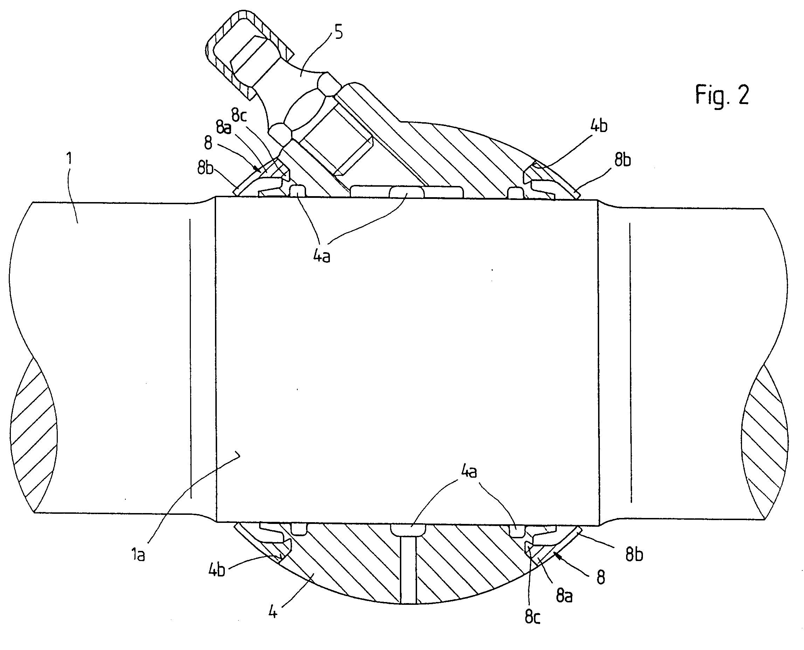

Durch diese auch in Fig. 2 erkennbare Gestaltung der jeweils in einer Ringnut 4b der Gleitlagerbuchse 4 angeordneten Dichtringe 8 entfallen durch zusätzliche Halteelemente zu montierende Dichtungen in der Art von Dichtmanschetten. Die Gleitlagerbuchse 4 mit den beiden formschlüssig festgelegten Dichtringen 8 bildet eine vormontierte Baueinheit, die auf einfache Weise auf die Lagerfläche 1a der Bremsnockenwelle 1 aufgeschoben und dort durch die Lagerhalbschalen 6a bzw. 3a bildenden Lagerträger 6 und Fixpunkthalter 3 gehalten wird.

### Bezugszeichenliste:

- 1: Bremsnockenwelle
- 1a: Mantelfläche
- 2: Gestängesteller
- 3: Fixpunkthalter
- 3a: Lagerhalbschale
- 4: Gleitlagerbuchse
- 4a: Schmiernut
- 4b: Ringnut
- 4c: Anlagefläche
- 4d: Stützfläche
- 4e: Hinterschneidung
- 5: Schmiernippel
- 6: Lagerträger
- 6a: Lagerhalbschale
- 7: Schraube
- 8: Dichtring
- 8a: Halteteil
- 8b: Dichtlippe
- 8c: Nase

## Patentansprüche

1. Gleitlagerbuchse, insbesondere für eine Bremsnockenwelle (1) einer Fahrzeugbremse für Fahrzeugachsen, mit die Gleitlagerbuchse (4) stirnseitig abdichtenden Dichtringen (8), die mit einer Dichtlippe (8b) dichtend auf der Welle (1) aufliegen und mittels eines formstabilen Halteteils (8a) in einer Ringnut (4b) der Gleitlagerbuchse (4) gehalten sind, wobei zwischen der Dichtlippe (8b) und dem Halteteil (8a) einerseits und der Wellenoberfläche andererseits ein Hohlraum gebildet ist,
**dadurch gekennzeichnet,**
daß die Ringnut (4b) jeweils in einer Stirnfläche der Gleitlagerbuchse (4) angeordnet und mit einer etwa radial verlaufenden Anlagefläche (4c) sowie einer schräg hierzu verlaufenden Stützfläche (4d) für den Halteteil (8a) des Dichtringes (8) ausgebildet ist, der nach elastischer Verformung mittels einer in eine Hinterschneidung (4e) der Ringnut (4b) eingreifenden Nase (8c) in axialer Richtung formschlüssig an der Gleitlagerbuchse (4) gehalten ist.

2. Gleitlagerbuchse nach Anspruch 1, dadurch gekennzeichnet, daß der einteilig mit einem formstabilen Halteteil (8a) und einer elastisch verformbaren Dichtlippe (8b) ausgebildete Dichtring (8) mit einer elastisch verformbaren Nase (8c) ausgeführt ist.

3. Gleitlagerbuchse nach Anspruch 1 oder 2, zur Verwendung an einer Bremsnockenwelle, dadurch gekennzeichnet, daß die Dichtringe (8) mindestens teilweise durch eine Lagerhalbschale (3a) bzw. (6a) der Gleitlagerbuchse (4) überdeckt sind.

4. Gleitlagerbuchse nach mindestens einem der Ansprüche 1 bis 3, dadurch gekennzeichnet, daß die Oberfläche der Gleitlagerbuchse (4) kugelringförmig ausgebildet ist.

5. Gleitlagerbuchse nach Anspruch 4, dadurch gekennzeichnet, daß die Außenkontur der Dichtringe (8) in Fortsetzung der Außenkontur der Oberfläche der Gleitlagerbuchse (4) verläuft.

6. Gleitlagerbuchse nach mindestens einem der Ansprüche 1 bis 5, dadurch gekennzeichnet, daß eine der Lagerhalbschalen (6a) als Teil des Lagerträgers (6) und die andere Lagerhalbschale (3a) als Teil eines Fixpunkthalters (3) für einen Gestängesteller (2) ausgebildet ist.
